(19) Europäisches Patentamt / European Patent Office / Office européen des brevets

(11) **EP 4 089 761 B1**

(12) **EUROPEAN PATENT SPECIFICATION**

(45) Date of publication and mention of the grant of the patent:
**28.01.2026 Bulletin 2026/05**

(21) Application number: **22747235.4**

(22) Date of filing: **14.02.2022**

(51) International Patent Classification (IPC):
$H01M\ 4/13^{(2010.01)}$    $H01M\ 4/62^{(2006.01)}$
$H01M\ 4/58^{(2010.01)}$    $H01M\ 10/052^{(2010.01)}$
$H01M\ 4/131^{(2010.01)}$    $H01M\ 4/02^{(2006.01)}$
$H01M\ 4/36^{(2006.01)}$    $H01M\ 4/04^{(2006.01)}$
$H01M\ 4/136^{(2010.01)}$    $H01M\ 10/0525^{(2010.01)}$
$H01M\ 4/505^{(2010.01)}$    $H01M\ 4/525^{(2010.01)}$

(52) Cooperative Patent Classification (CPC):
**H01M 4/5825; H01M 4/0404; H01M 4/136;**
**H01M 4/366; H01M 4/62; H01M 10/0525;**
H01M 4/131; H01M 4/505; H01M 4/525;
H01M 2004/028; Y02E 60/10

(86) International application number:
**PCT/KR2022/002135**

(87) International publication number:
**WO 2022/177242 (25.08.2022 Gazette 2022/34)**

(54) **POSITIVE ELECTRODE FOR LITHIUM SECONDARY BATTERY COMPRISING LITHIUM IRON PHOSPHATE PRIMER LAYER, AND LITHIUM SECONDARY BATTERY COMPRISING SAME**

POSITIVE ELEKTRODE FÜR LITHIUMSEKUNDÄRBATTERIE MIT LITHIUMEISENPHOSPHAT-GRUNDIERUNGSSCHICHT UND LITHIUM-SEKUNDÄRBATTERIE DAMIT

ÉLECTRODE POSITIVE POUR BATTERIE SECONDAIRE AU LITHIUM COMPRENANT UNE COUCHE PRIMAIRE DE PHOSPHATE DE FER LITHIÉ, ET BATTERIE SECONDAIRE AU LITHIUM LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.02.2021 KR 20210023120**

(43) Date of publication of application:
**16.11.2022 Bulletin 2022/46**

(73) Proprietor: **LG ENERGY SOLUTION, LTD.**
**Seoul 07335 (KR)**

(72) Inventors:
• **KIM, Juryoun**
**Daejeon 34122 (KR)**
• **YOON, Sung Soo**
**Daejeon 34122 (KR)**

(74) Representative: **Plasseraud IP**
**104 Rue de Richelieu**
**CS92104**
**75080 Paris Cedex 02 (FR)**

(56) References cited:
CN-A- 110 114 914    KR-A- 20130 016 061
KR-A- 20160 040 019    KR-A- 20180 107 759
KR-A- 20180 107 759    KR-A- 20190 086 229
US-A1- 2009 301 866    US-A1- 2019 267 612

• DIEHM RALF, MARCUS MÜLLER,DAVID BURGER,JANA KUMBERG,SANDRO SPIEGEL,WERNER BAUER,PHILIP SCHARFER,WILHELM SCHABEL: "High-Speed Coating of Primer Layer for Li-Ion Battery Electrodes by Using Slot-Die Coating", ENERGY TECHNOLOGY, vol. 8, 2 July 2020 (2020-07-02), pages 2000259, XP055960433, DOI: 10.1002/ente.202000259

# EP 4 089 761 B1

## Description

### [TECHNICAL FIELD]

This application claims the benefit of Korean Patent Application No. 10-2021-0023120 filed on February 22, 2021 with the Korean Intellectual Property Office.

The present disclosure relates to a positive electrode for a lithium secondary battery with a primer layer comprising lithium iron phosphate, and a lithium secondary battery comprising the same

### [BACKGROUND]

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

Recently, along with the increase of the technological development and demand for mobile devices such as portable computers, portable phones, and cameras, the demand for secondary batteries has also sharply increased as an energy source. Among such secondary batteries is a lithium secondary battery exhibiting high charge/discharge characteristics and lifespan characteristics and being environmentally friendly, in which much research has been carried out and which is now commercialized and widely used.

Generally, the secondary battery is manufactured by impregnating a non-aqueous electrolyte solution into an electrode assembly comprising a positive electrode, a negative electrode, and a porous separator.

A carbon material is mainly used as a negative electrode active material of such a lithium secondary battery, and the use of lithium metal, sulfur compounds, etc. is also being considered. Also, as a positive electrode active material, lithium-containing cobalt oxide ($LiCoO_2$) is mainly used, and additionally, the use of lithium-containing manganese oxides such as $LiMnO_2$ having a layered crystal structure and $LiMn_2O_4$ having a spinel crystal structure, and lithium-containing nickel oxide ($LiNiO_2$) is being considered.

Moreover, in recent years, a lithium iron phosphate ($LiFePO_4$)-based compound having excellent thermal stability and being relatively inexpensive may be used as a positive electrode active material. US2009301866A1, CN110114914A US2019267612 and KR1020180107759A disclose positive electrode active material compositions comprising lithium iron phosphate.

However, such this lithium iron phosphate has low energy density compared to other materials despite the advantages of excellent thermal stability and low price, and is therefore unsuitable for use in products requiring high energy density.

Further, since the lithium iron phosphate has a drawback of low electrical conductivity and ionic conductivity, it is applied by coating the surface of the lithium iron phosphate with carbon to improve electrical conductivity, and reducing the particle size to improve the ionic conductivity. However, in the case of reducing the particle size in this manner, the specific surface area increases and also aggregation occurs severely, which causes that the dispersibility is lowered by the existing mixing process and the slurry solid content is lowered.

Therefore, there is an urgent need to develop a technology for a positive electrode that can have excellent characteristics as a whole without deteriorating special performance of the lithium secondary battery.

### [DETAILED DESCRIPTION OF THE INVENTION]

#### [Technical Problem]

The present disclosure has been designed to solve the above-mentioned problems and other technical problems that have yet to be resolved.

Specifically, an object of the present disclosure is to provide a positive electrode for a lithium secondary battery which can realize high energy density while improving thermal stability, and at the same time, has excellent slurry characteristics for the production of positive electrodes, and a lithium secondary battery comprising the same

#### [Technical Solution]

In order to achieve the above object, according to one embodiment of the present disclosure, there is provided a positive electrode for a lithium secondary battery comprising:

a positive electrode current collector,

a primer coating layer formed on the positive electrode current collector, and

a positive electrode active material layer formed on the primer coating layer,

wherein the primer coating layer comprises lithium iron phosphate, a binder, a conductive material and a dispersant,

wherein the lithium iron phosphate is represented by the following Chemical Formula 1,

wherein the dispersant is a hydrogenated nitrile butadiene rubber (HNBR), and

wherein the hydrogenated nitrile butadiene rubber is contained in an amount of 0.4 to 2.0 wt% based on the weight of lithium iron phosphate, and the residual double bond (RDB) present in the hydrogenated nitrile butadiene rubber is contained in an amount of 30% or less.

[Chemical Formula 1] $\qquad$ $Li_{1+a}Fe_{1-s}M_s(PO_{4-b})X_b$

wherein,

M is at least one element selected from Co, Ni, Al, Mg, Ti and V,

X is F, S, or N, and

$$0 \leq s \leq 0.5; \ -0.5 \leq a \leq +0.5; \ 0 \leq b \leq 0.1.$$

In one specific embodiment, the lithium iron phosphate may be composed of primary particles, or may be a mixture of the primary particles and secondary particles in a state where the primary particles are aggregated.

The primary particles of the lithium iron phosphate may have an average diameter (D50) of 0.2 to 3.0 $\mu$m, and the secondary particles may have an average diameter (D50) of 7 to 25 $\mu$m.

The lithium iron phosphate may be in a state where the primary particles and/or secondary particles are carbon-coated.

In one specific embodiment, the content of acrylonitrile (AN) of the hydrogenated nitrile butadiene rubber may be 20 to 50 wt%, and the residual double bond (RDB) present in the hydrogenated nitrile butadiene rubber may be contained in an amount of 30% or less.

Further, the hydrogenated nitrile butadiene rubber may have a weight average molecular weight (Mw) of 10,000 to 250,000.

In one specific embodiment, the binder included in the primer coating layer may be polyvinylidene fluoride (PVdF) having a weight average molecular weight (Mw) of 500,000 to 1,200,000.

In one specific embodiment, the primer coating layer may be formed to a thickness of 1 to 5 $\mu$m, and the positive active material layer may be formed to a thickness of 50 to 300 $\mu$m.

In one specific embodiment, the positive electrode active material layer may include a lithium transition metal oxide as a positive electrode active material, and the lithium transition metal oxide may include at least one transition metal selected from the group consisting of Ni, Mn, and Co.

According to one embodiment of the present disclosure, there is provided a lithium secondary battery comprising the positive electrode for a lithium secondary battery.

[DETAILED DESCRIPTION OF THE EMBODIMENTS]

Hereinafter, the present disclosure will be described in more detail for a better understanding of the present disclosure.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

The technical terms provided herein is merely used for the purpose of describing particular embodiments only, and is not intended to be limiting of the present disclosure. The singular forms "a," "an," and "the" are intended to include the plural forms as well, unless the context clearly indicates otherwise.

As used herein, the terms "comprise", "include" or "have", etc. are intended to designate the existence of a specific feature, number, step, constitutional element and a combination thereof, but does not exclude the presence or addition of a different specific feature, number, step, constitutional element and a combination thereof step.

According to one embodiment of the present disclosure, there is provided a positive electrode for a lithium secondary battery comprising:

a positive electrode current collector,
a primer coating layer formed on the positive electrode current collector, and
a positive electrode active material layer formed on the primer coating layer,
wherein the primer coating layer comprises lithium iron phosphate, a binder, a conductive material and a dispersant,
wherein the lithium iron phosphate is represented by the following Chemical Formula 1,
wherein the dispersant is a hydrogenated nitrile butadiene rubber (HNBR), and
wherein the hydrogenated nitrile butadiene rubber is contained in an amount of 0.4 to 2.0 wt% based on the weight of lithium iron phosphate and the residual double bond (RDB) present in the hydrogenated nitrile butadiene rubber is contained in an amount of 30% or less.

[Chemical Formula 1] $\quad\quad Li_{1+a}Fe_{1-s}M_s(PO_{4-b})X_b$

wherein,

M is at least one element selected from Co, Ni, Al, Mg, Ti and V,
X is F, S, or N, and

$$0 \le s \le 0.5; \; -0.5 \le a \le +0.5; \; 0 \le b \le 0.1.$$

Here, the primer coating layer according to the present disclosure not only improves the adhesive force and electrical conductivity between the current collector and the positive electrode active material layer, but also is a layer applied to improve thermal stability, which is coated with a thin thickness different from that of a general positive electrode active material layer.

The primer coating layer for this purpose includes lithium iron phosphate, a binder, a conductive material, and a dispersant.

At this time, the lithium iron phosphate may be specifically $LiFePO_4$, and the lithium iron phosphate may be composed of primary particles or a mixture of the primary particles and secondary particles in a state where the primary particles are aggregated.

That is, the lithium iron phosphate tends to aggregate, and is mainly used in the form of secondary particles, but according to the present disclosure, the ionic conductivity can be increased by using primary particles having a relatively small size.

At this time, the primary particles have an average diameter (D50) of 0.2 to 3.0 $\mu$m, specifically 0.2 to 1.0 $\mu$m, more specifically, 0.3 to 0.8 $\mu$m, and the secondary particles may have an average diameter (D50) of 2 to 10 $\mu$m, specifically 2 to 5 $\mu$m.

When the primary particle is too small outside the above range, the dispersibility is significantly reduced and aggregated, which makes it difficult to prepare the primary particles, and when the primary particle is too large, the difference from the secondary particles is small and the ionic conductivity may be lowered, which is not preferable. Even when the secondary particles are large, it is difficult to make the coating layer of the present disclosure uniform, and the ionic conductivity may be lowered, which is not preferable.

The average diameter (D50) means a particle diameter corresponding to a point of n% in the cumulative distribution of the number of particles relative to the particle diameter. That is, D50 is the particle diameter corresponding to a point of 50% in the cumulative distribution of the number of particles relative to the particle diameter.

The average diameter (D50) can be measured by using a laser diffraction method. Specifically, the powder to be measured is dispersed in a dispersion medium, and then introduced into a commercially available laser diffraction particle size analyzer (e.g., Mastersizer 3000 available from Malvern). When the particles pass through the laser beam, the diffraction pattern difference according to the particle size is measured to calculate the particle size distribution. The D50 can be measured by calculating the particle diameter corresponding a point of 50% in the cumulative distribution of the number of particles relative to the particle diameter in the analyzer.

Meanwhile, since the lithium iron phosphate oxide is used for the primer coating layer, it is preferably excellent in electrical conductivity. Thus, specifically, the primary particles and/or secondary particles of the lithium iron phosphate may be in a carbon-coated form.

In this manner, the lithium iron phosphate used for the primer coating layer has a small size, and has a problem that the dispersibility is greatly lowered only by the existing slurry mixing step and the solid content of the slurry is lowered, and thus improvement thereof is needed.

Therefore, the primer coating layer according to the present disclosure contains a dispersant together with the lithium iron phosphate, wherein the dispersant may be a hydrogenated nitrile butadiene rubber (HNBR).

The hydrogenated nitrile butadiene rubber (HNBR) means that the double bond originally contained in the nitrile butadiene rubber (NBR) is changed to a single bond by hydrogenating the nitrile butadiene rubber (NBR).

At this time, the content of acrylonitrile (AN) of the hydrogenated nitrile butadiene rubber may be 20 to 50 wt%, specifically 30 to 40 wt%, based on the total weight of the hydrogenated nitrile butadiene rubber (HNBR).

The acrylonitrile (AN) is polar, and the hydrogenated nitrile butadiene is non-polar. Thus, when the content of the acrylonitrile (AN) is too small or too large, dispersion in a solvent is not preferable when preparing the primer coating layer slurry.

Further, the residual double bond (RDB) present in the hydrogenated nitrile butadiene rubber is 30% or less, specifically may be 20% or less, more specifically 10% or less, and most specifically 5% or less.

When the ratio of the residual double bond (RDB) is too large outside the above range, it may decrease the phase stability such as an increase in the possibility of side reactions with the electrolyte and gelation of the primer coating layer slurry, which is not preferable.

Further, the weight average molecular weight (Mw) of the hydrogenated nitrile butadiene rubber may be 10,000 to 250,000, specifically, 150,000 to 250,000.

Meanwhile, in order to minimize the problem of acting as a resistor while improving the dispersibility of the lithium iron phosphorus oxide, the hydrogenated nitrile butadiene rubber may be contained in an amount of 0.4 to 2.0 wt%, specifically, 0.5 to 1.0 wt% based on the weight of lithium iron phosphate.

When the hydrogenated nitrile butadiene rubber (HNBR) is contained in an amount of less than 0.4%, the surface area of lithium iron phosphate increases as the dispersed particle size decreases, and the dispersant does not sufficiently cover the surface of the increased lithium iron phosphate and thus, the slurry viscosity may increase significantly. When the content is more than 2.0%, an excess of the dispersant that is not adsorbed to the surface of the lithium iron phosphate may be present in the solvent, which may cause an increase in slurry viscosity.

Further, the primer coating layer includes a conductive material and a binder in addition to the lithium iron phosphate and the dispersant.

The conductive material is not particularly limited as long as it has conductivity without causing a chemical change in the corresponding battery, and for example, such as natural graphite or artificial graphite; carbon blacks such as carbon black, acetylene black, ketjen black, channel black, furnace black, lamp black, and thermal black; conductive fibers such as carbon fiber and metal fiber; metal powders such as carbon fluoride powder, aluminum powder, and nickel powder; conductive whiskey such as zinc oxide and potassium titanate; conductive metal oxides such as titanium oxide; conductive materials such as polyphenylene derivatives can be used.

Specific examples of commercially available conductive materials include acetylene black series products available from Chevron Chemical Company, Denka Singapore Private Limited, Gulf Oil Company, Ketjen black, EC series products available from Armak Company, Vulcan XC-72 available from Cabot Company and Super P available from Timcal, and the like.

Wherein, the content of the conductive material may be contained in an amount of 1 to 30 wt%, specifically 1 to 10 wt%, more specifically 1 to 5 wt% based on the total weight of the primer coating layer.

The binder is a type of binder known in the art, and is not limited as long as it is a type capable of improving the adhesive force of the electrode components. Examples thereof may be at least one selected from the group consisting of polyvinylidene fluoride, polyvinylidene fluoride-hexafluoropropylene, polyvinyl alcohol, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber, and fluorine rubber.

Specifically, the binder may be polyvinylidene fluoride (PVDF), and more specifically, polyvinylidene fluoride (PVDF) having a weight average molecular weight (Mw) of 500,000 to 1,200,000, specifically 700,000 to 1,000,000.

When the PVDF is contained, it can have the best phase stability with lithium iron phosphate, which is preferable.

When PVDF having a weight average molecular weight satisfying the above range is used, problems such as a decrease in solid content due to increase in the viscosity of the primer coating layer slurry do not occur while being able to have high adhesive force, which is preferable.

Wherein, the binder may be contained in an amount of 1 to 10 wt%, specifically 1 to 5 wt%, based on the total weight of the primer coating layer. When the content of the binder is too small outside the above range, the adhesive force is too low, making it difficult to maintain the coating layer, and when the content is too large, the resistance can be high.

The primer coating layer may be formed to a thickness of 1 to 20 $\mu$m, specifically 1 to 10 $\mu$m, and more specifically 1 to 5 $\mu$m.

When the primer coating layer is formed too thin outside the above range, it is not possible to sufficiently secure the thermal stability to be obtained by applying it according to the present disclosure, and when the primer coating layer is formed too thick, it acts like an active material layer rather than serving as a primer layer, whereby the volume of the positive electrode active material layer of the present disclosure is relatively reduced in the same volume, and therefore, the content of the positive electrode active material capable of increasing the energy density is reduced, which is not preferable in terms of secondary battery performance.

Meanwhile, the positive electrode active material layer formed on the primer coating layer may further include a positive electrode active material, and may further include the conductive material and the binder, and optionally, may further include an additive such as a filler.

In this case, examples of the conductive material and the binder are the same as described above, and may include the same or different materials from the conductive material and the binder included in the primer coating layer.

The positive active material may include a lithium transition metal oxide.

The lithium transition metal oxide may include, for example, a layered compound such as lithium cobalt oxide ($LiCoO_2$) or lithium nickel oxide ($LiNiO_2$) or a compound substituted with one or more transition metals; lithium manganese oxides such as chemical formulae $Li_{1+x}Mn_{2-x}O_4$ (where, x is 0 ~ 0.33), $LiMnO_3$, $LiMn_2O_3$, $LiMnO_2$; lithium copper oxide ($Li_2CuO_2$); vanadium oxides such as $LiV_3O_8$; lithium iron oxides such as $LiFe_3O_4$, a Ni-site type lithium nickel oxide represented by chemical formula $LiNi_{1-x}MxO_2$ (where, M = at least one selected from Co, Mn, Al, Cu, Fe, Mg, B and Ga, and x= 0.01 ~ 0.3); lithium manganese composite oxide represented by chemical formulae $LiMn_{2-x}MxO_2$ (where, M = at least one selected from Co, Ni, Fe, Cr, Zn or Ta, and x = 0.01 ~ 0.1) or $Li_2Mn_3MO_8$ (where, M = at least one selected from Fe, Co, Ni, Cu or Zn ); lithium manganese composite oxide having a spinel structure represented by $LiNixMn_{2-x}O_4$, $LiMn_2O_4$ in which a portion of Li in the chemical formula is substituted with an alkaline earth metal ion, and the like.

Specifically, it may be a lithium transition metal oxide including at least one transition metal selected from the group consisting of Ni, Mn, and Co.

That is, according to the present disclosure, a positive electrode active material layer is formed on a primer coating layer containing lithium iron phosphate and a dispersing agent, and the positive electrode active material layer has a structure that does not contain lithium iron phosphate and includes lithium transition metal oxide as a positive electrode active material. If the positive electrode active material layer also uses lithium iron phosphate as the positive electrode active material, it can be used to a voltage drive range of 3.6V or less, wherein the energy density is lowered. Thus, in the present disclosure, the lithium iron phosphate is preferably included only in the primer coating layer.

The thickness of the positive active material layer is not limited, but, for example, may be formed to a thickness of 50 to 300 $\mu$m.

Meanwhile, the positive electrode current collector is not particularly limited as long as it has conductivity while not causing chemical changes to the battery, and for example, stainless steel, aluminum, nickel, titanium, calcined carbon, or aluminum or stainless steel having a surface treated with carbon, nickel, titanium, silver, and the like can be used. In addition, the first positive electrode current collector may have a thickness of 3 to 500 $\mu$m, and may have fine irregularities formed on the surface of the current collector to increase the adhesive force of the first positive electrode active material. For example, it may be used in various forms such as films, sheets, foils, nets, porous bodies, foams, and nonwoven fabrics.

Meanwhile, according to another embodiment of the present disclosure, there is provided a lithium secondary battery including the positive electrode for the lithium secondary battery.

The lithium secondary battery has a structure in which an electrode assembly including a negative electrode together with the positive electrode and a separator interposed between the positive electrode and the negative electrode is incorporated in a battery case together with a lithium non-aqueous electrolyte.

Other components and structures, etc. of such a lithium secondary battery are incorporated in the present disclosure with the contents known in the art, and, therefore, detailed description thereof will be omitted.

Hereinafter, preferred examples of the present disclosure, comparative examples for comparing them, and experimental examples for evaluating them are described. However, it will be obvious to those skilled in the art that these examples are for illustrative purposes only and various changes and modifications can be made without deviating from the scope of the present description, and it goes without saying that such modifications and modifications fall within the scope of the appended claims.

<Preparation Example 1>

Primary particle $LiFePO_4$ (average diameter (D50): 0.5±0.15 $\mu$m), HNBR dispersant (Mw: 220,000±30,000, AN content: 35±3wt%, RDB 0~5%) were mixed in a weight ratio of 100:1 in a NMP solvent so that the solid content was 61%, thereby preparing a slurry.

<Preparation Example 2>

Primary particles $LiFePO_4$ (average diameter (D50): 0.5±0.15 $\mu$m) were mixed in an NMP solvent so that the solid content was 61%%, thereby preparing a slurry.

<Experimental Example 1>

The viscosity of the slurry prepared in Preparation Examples 1 and 2, and the average diameter (D50) of the LFP particles were measured, and shown in Table 1 below.

The average diameter of the LFP particles was measured by using a laser diffraction particle size analyzer (e.g., Mastersizer 3000 available from Malvern). When passing the particles through the laser beam, the diffraction pattern difference according to the particle size was measured to calculate the particle size distribution. The D50 was measured by calculating the particle diameter corresponding a point of 50% in the cumulative distribution of the number of particles relative to the particle diameter in the analyzer.

[Table 1]

|  | Viscosity (cps) | LFP PSD(D50) |
|---|---|---|
| Preparation Example 1 | 1980 | 0.88 |
| Preparation Example 2 | 9370 | 1.50 |

Referring to Table 1 above, it can be confirmed that due to the inclusion of the dispersant, LFP is well dispersed and there is less aggregation between particles, so that D50 is still similar to the size of the primary particles and the viscosity is not high, whereas Preparation Example 2 does not include the dispersant, the particle diameter and viscosity increase as the LFP aggregates with each other.

<Example 1>

Primary particles $LiFePO_4$ (average diameter (D50): $0.5 \pm 0.15$ $\mu$m), HNBR dispersant (Mw: $220,000 \pm 30,000$, AN content: $35 \pm 3$ wt%, RDB 0~5%), a conductive material (carbon black) and a binder (PVDF, Mw: $700,000 \pm 50,000$) were mixed at a weight ratio of 94.5:1:1.5:3 in an NMP solvent to prepare a primer slurry. At this time, the solid content was set to 45%.

The slurry was coated onto Al foil (thickness: 12 $\mu$m) to a thickness of 5 $\mu$m and dried to form a primer coating layer.

Then, $LiCoO_2$ as a positive electrode active material, a conductive material (carbon black), and a binder (PVDF, Mw: $700,000 \pm 50,000$) were mixed at a weight ratio of 95.5:1.5:3 in an NMP solvent to prepare an active material slurry.

The active material slurry was coated onto the primer coating layer to a thickness of 100 $\mu$m and dried to form an active material layer, thereby producing a positive electrode.

<Example 2>

A positive electrode was produced in the same manner as in Example 1, except that in Example 1, primary particles $LiFePO_4$ (average diameter (D50): $0.5 \pm 0.15$ $\mu$m), HNBR dispersant (Mw: $220,000 \pm 30,000$, AN content: $35 \pm 3$wt%, RDB 0~5%), a conductive material (carbon black) and a binder (PVDF, Mw: $700,000 \pm 50,000$) were mixed at a weight ratio of 88.1:0.9:3:8 in an NMP solvent to prepare a primer slurry, wherein the solid content was set to 45%.

<Comparative Example 1>

A positive electrode was produced in the same manner as in Example 1, except that in Example 1, primary particles $LiFePO_4$ (average diameter (D50): $0.5 \pm 0.15$ $\mu$m), a conductive material (carbon black) and a binder (PVDF, Mw: $700,000 \pm 50,000$) were mixed at a weight ratio of 95.5:1.5:3 in an NMP solvent to prepare a primer slurry, wherein the solid content was set to 45%.

<Example 3>

A positive electrode was produced in the same manner as in Example 1, except that the primer slurry was coated to a thickness of 25 $\mu$m, and the active material slurry was coated to a thickness of 80 $\mu$m.

<Example 4>

A positive electrode was produced in the same manner as in Example 1, except that the primer slurry was coated to a thickness of 10 $\mu$m, and the active material slurry was coated to a thickness of 90 $\mu$m.

<Comparative Example 2>

A positive electrode was produced in the same manner as in Example 1, except that the primer slurry was not coated, and the active material slurry was coated to a thickness of 105 $\mu$m.

<Comparative Example 3>

A positive electrode was produced in the same manner as in Example 1, except that the primer slurry prepared in Example 1 was coated and dried to a thickness of 105 $\mu$m, and the active material slurry was not applied.

<Experimental Example 1>

MCMB (mesocarbon microbead), which is artificial graphite as a negative electrode active material, carbon black conductive material, SBR binder and CMC were mixed in a weight ratio of 95.8:0.5:2.5:1.2 in $H_2O$ solvent to prepare a negative electrode active material slurry, which was then applied to a thickness of 65 $\mu$m onto a copper foil (thickness: 8 $\mu$m) to produce a negative electrode.

A separator of porous polyethylene was interposed between the positive electrode and the negative electrode produced in Examples 1 to 3 and Comparative Examples 1 and 2 as described above to prepare an electrode assembly. The electrode assembly was placed inside a case, and an electrolyte solution was injected into the case to produce a lithium secondary battery. At this time, the electrolyte solution was prepared by dissolving 1.0M concentration of lithium hexafluorophosphate (LiPF$_6$) in an organic solvent consisting of ethylene carbonate / dimethyl carbonate / ethyl methyl carbonate (mixed volume ratio of EC / DMC / EMC = 3 / 4 / 3).

Resistance: the lithium secondary battery prepared above was charged up to 4.35V/38mA at 1C under constant current/constant voltage (CC/CV) conditions at a temperature of 25°C, and then discharged up to 2.5V at 2C under constant current (CC) conditions to confirm the discharge capacity. Next, after charging in the same manner as above, the discharge was performed only by 50% of the previously confirmed discharge capacity. Then, after discharging at 2.5C for 10 seconds, the resistance was calculated using the voltage difference before and after discharge.

High-temperature capacity retention rate (%): the lithium secondary battery prepared above was charged up to 4.35V/38mA at 1C under constant current/constant voltage (CC/CV) conditions at a temperature of 45°C, and then discharged up to 2.5 V at 2 C under constant current (CC) conditions to measure the discharge capacity. This process was repeated by 1 to 200 cycles. A value calculated by (capacity after 200 cycles/capacity after 1 cycle) x 100 was expressed as a high-temperature capacity retention rate (%).

Impact: the lithium secondary battery prepared above was fully charged up to 4.35V/38mA at 1C under constant current/constant voltage (CC/CV) conditions at room temperature, and then 9.8kg bar was freely dropped at a height of 61 cm to apply an impact to the cell. When maintained for 1 hour after the impact was applied, it was judged as Pass if the temperature dropped to less than 50 degrees.

Nail penetration: the lithium secondary battery prepared above was fully charged up to 4.35V/38mA at 1C under constant current/constant voltage (CC/CV) conditions at room temperature, and then nail penetration experiment was performed under GB/T conditions (nail diameter of 3mm, penetration speed of 150mm/sec). When maintained for 1 hour after nail penetration, and it was judged as Pass if the temperature dropped to less than 50 degrees.

The measurement results are shown in Table 2 below.

[Table 2]

| | Resistance (ohm) | High-temperature capacity retention rate (%) | Impact (pass/experiment) | Nail penetration (pass/experiment) |
|---|---|---|---|---|
| Example 1 | 1.20 | 94.2 | 3/3 | 3/3 |
| Example 2 | 1.41 | 92.3 | 3/3 | 2/2 |
| Comparative Example 1 | 1.34 | 93.1 | 2/3 | 1/2 |
| Example 3 | 1.47 | 85.2 | 3/3 | 1/2 |
| Comparative Example 4 | 1.36 | 88.6 | 3/3 | 2/3 |
| Comparative Example 2 | 1.18 | 93.9 | 0/3 | 0/3 |
| Comparative Example 3 | 1.86 | 81.7 | 3/3 | 3/3 |

Referring to Table 2, it can be confirmed that examining Example 1 and Comparative Example 1 according to the present disclosure, by introducing a dispersant, the dispersibility is improved, the resistance is also reduced and the thermal stability is improved, thereby effectively solving the problems caused by impact and nail penetration.

Additionally, when the primer coating layer is not formed at all as in Comparative Example 2, it can be confirmed that it cannot pass both the impact and nail penetration tests, so the thermal stability is significantly lowered.

Moreover, when only the positive active material layer is formed using a dispersant as in Comparative Example 3, there is a problem that although the safety is ensured as compared with the case of forming a primer coating layer thinly, the resistance is increased and the amount of active material is relatively reduced, thereby reducing capacity retention rate.

On the other hand, comparing Example 1 and Example 2, when the content of the binder of the primer coating layer increases, the resistance increases and may decrease in terms of capacity, which is more preferably included in an amount of 5 wt% or less.

Additionally, examining Example 1 and Examples 3 and 4, the effect on impact and nail penetration can be confirmed, but when forming a primer coating layer thickly as in Examples 3 and 4, the layer of the positive active material exhibiting high capacity is relatively reduced, while the safety is rather decreased, and thus there is a drawback in that the resistance increases and the capacity retention rate is reduced, and further it is also disadvantageous in terms of energy density.

[Industrial Applicability]

As described above, the positive electrode for a lithium secondary battery according to an embodiment of the present disclosure improves thermal stability by applying lithium iron phosphate as a primer coating layer, and at the same time, has an effect of improving energy density by separately applying a positive electrode active material layer containing other lithium transition metal oxides to a substantial capacity.

Additionally, in comparison with the case of applying a primer coating layer containing only a general conductive material, the present disclosure not only has an effect that can contribute to capacity increase by including lithium iron phosphate, but also solves the problem of the lowering of the dispersibility of lithium iron phosphate by adding a small amount of the dispersant, thereby solving the problem of slurry processability caused by the lowering of dispersibility, and effectively exhibiting the performance improvement of the lithium secondary battery, such as electrical conductivity according to the application of the primer coating layer.

Based on the above disclosure, various applications and modifications can be carried out by those of ordinary skill in the art without deviating from scope of the present disclosure.

**Claims**

1. A positive electrode for a lithium secondary battery comprising:

    a positive electrode current collector,
    a primer coating layer formed on the positive electrode current collector, and
    a positive electrode active material layer formed on the primer coating layer,
    wherein the primer coating layer comprises lithium iron phosphate, a binder, a conductive material and a dispersant,
    wherein the lithium iron phosphate is represented by the following Chemical Formula 1:

    [Chemical Formula 1]     $Li_{1+a}Fe_{1-s}M_s(PO_{4-b})X_b$

    wherein,

    M is at least one element selected from Co, Ni, Al, Mg, Ti and V,
    X is F, S, or N, and

    $$0 \leq s \leq 0.5; \; -0.5 \leq a \leq +0.5; \; 0 \leq b \leq 0.1,$$

    wherein the dispersant is a hydrogenated nitrile butadiene rubber (HNBR), and
    wherein the hydrogenated nitrile butadiene rubber is contained in an amount of 0.4 to 2.0 wt% based on the weight of lithium iron phosphate, and the residual double bond (RDB) present in the hydrogenated nitrile butadiene rubber is contained in an amount of 30% or less.

2. The positive electrode for a lithium secondary battery according to claim 1, wherein:
the lithium iron phosphate is composed of primary particles, or is a mixture of the primary particles and secondary particles in a state where the primary particles are aggregated.

3. The positive electrode for a lithium secondary battery according to claim 2, wherein:
the primary particles of the lithium iron phosphate have an average diameter (D50) of 0.2 to 3.0 $\mu$m, and the secondary particles have an average diameter (D50) of 7 to 25 $\mu$m.

4. The positive electrode for a lithium secondary battery according to claim 2, wherein:
the lithium iron phosphate is in a state where the primary particles and/or secondary particles are carbon-coated.

5. The positive electrode for a lithium secondary battery according to claim 1, wherein:
the content of acrylonitrile (AN) of the hydrogenated nitrile butadiene rubber is 20 to 50 wt%, and the residual double bond (RDB) present in the hydrogenated nitrile butadiene rubber is contained in an amount of 30% or less.

6. The positive electrode for a lithium secondary battery according to claim 1, wherein:
the hydrogenated nitrile butadiene rubber has a weight average molecular weight (Mw) of 10,000 to 250,000.

7. The positive electrode for a lithium secondary battery according to claim 1, wherein:
the binder included in the primer coating layer is polyvinylidene fluoride (PVdF) having a weight average molecular weight (Mw) of 500,000 to 1,200,000.

8. The positive electrode for a lithium secondary battery according to claim 1, wherein:
the primer coating layer is formed to a thickness of 1 to 5 $\mu$m.

9. The positive electrode for a lithium secondary battery according to claim 1, wherein:
the positive active material layer is formed to a thickness of 50 to 300 $\mu$m.

10. The positive electrode for a lithium secondary battery according to claim 1, wherein:
the positive electrode active material layer comprises a lithium transition metal oxide as a positive electrode active material.

11. The positive electrode for a lithium secondary battery according to claim 10, wherein:
the lithium transition metal oxide comprises at least one transition metal selected from the group consisting of Ni, Mn, and Co.

12. A lithium secondary battery comprising the positive electrode for a lithium secondary battery according to any one of claims 1 to 11.

**Patentansprüche**

1. Positive Elektrode für eine Lithium-Sekundärbatterie, umfassend:

einen Positive-Elektrode-Stromkollektor,
eine Grundierungsbeschichtungsschicht, welche an dem Positive-Elektrode-Stromkollektor gebildet ist, und
eine Positive-Elektrode-Aktivmaterialschicht, welche an der Grundierungsbeschichtungsschicht gebildet ist,
wobei die Grundierungsbeschichtungsschicht Lithiumeisenphosphat, ein Bindemittel, ein leitfähiges Material und ein Dispersionsmittel umfasst,
wobei das Lithiumeisenphosphat durch die folgende Chemische Formel 1 repräsentiert ist:

[Chemische Formel 1] $\qquad$ $Li_{1+a}Fe_{1-s}M_s(PO_{4-b})X_b$

wobei,
M wenigstens ein Element ist, welches aus Co, Ni, Al, Mg, Ti und V ausgewählt ist,
X F, S, oder N ist, und

$$0 \leq s \leq 0,5; \; -0,5 \leq a \leq +0,5; \; 0 \leq b \leq 0,1,$$

wobei das Dispersionsmittel ein hydrierter Nitril-Butadien-Kautschuk (HNBR) ist, und
wobei der hydrierte Nitril-Butadien-Kautschuk in einer Menge von 0,4 bis 2,0 Gewichtsprozent, auf Grundlage des Gewichts des Lithiumeisenphosphats, enthalten ist, und die restlichen Doppelbindungen (RDB), welche in dem hydrierten Nitril-Butadien-Kautschuk vorliegen, in einer Menge von 30 % oder weniger enthalten sind.

2. Positive Elektrode für eine Lithium-Sekundärbatterie nach Anspruch 1, wobei:
das Lithiumeisenphosphat aus Primärpartikeln besteht, oder eine Mischung aus den Primärpartikeln und Sekundärpartikeln in einem Zustand ist, in welchem die Primärpartikel aggregiert sind.

3. Positive Elektrode für eine Lithium-Sekundärbatterie nach Anspruch 2, wobei:
die Primärpartikel des Lithiumeisenphosphats einen durchschnittlichen Durchmesser (D50) von 0,2 bis 3,0 $\mu$m aufweisen und die Sekundärpartikel einen durchschnittlichen Durchmesser (D50) von 7 bis 25 $\mu$m aufweisen.

4. Positive Elektrode für eine Lithium-Sekundärbatterie nach Anspruch 2, wobei:
das Lithiumeisenphosphat in einem Zustand ist, in welchem die Primärpartikel und/oder die Sekundärpartikel kohlenstoffbeschichtet sind.

5. Positive Elektrode für eine Lithium-Sekundärbatterie nach Anspruch 1, wobei:
der Gehalt von Acrylnitrid (AN) des hydrierten Nitril-Butadien-Kautschuks 20 bis 50 Gewichtsprozent ist, und die restlichen Doppelbindungen (RDB), welche in dem hydrierten Nitril-Butadien-Kautschuk vorliegen, in einer Menge von 30 % oder weniger enthalten sind.

6. Positive Elektrode für eine Lithium-Sekundärbatterie nach Anspruch 1, wobei:
der hydrierte Nitril-Butadien-Kautschuk ein gewichtsmittleres Molekulargewicht (Mw) von 10.000 bis 250.000 aufweist.

7. Positive Elektrode für eine Lithium-Sekundärbatterie nach Anspruch 1, wobei
das Bindemittel, welches in der Grundierungsbeschichtungsschicht umfasst ist, Polyvinylidenfluorid (PVdF) ist, welches ein gewichtsmittleres Molekulargewicht (Mw) von 500.000 bis 1.200.000 aufweist.

8. Positive Elektrode für eine Lithium-Sekundärbatterie nach Anspruch 1, wobei:
die positive Grundierungsbeschichtungsschicht in einer Dicke von 1 bis 5 $\mu$m gebildet ist.

9. Positive Elektrode für eine Lithium-Sekundärbatterie nach Anspruch 1, wobei:
die positive Aktivmaterialschicht in einer Dicke von 50 bis 300 $\mu$m gebildet ist.

10. Positive Elektrode für eine Lithium-Sekundärbatterie nach Anspruch 1, wobei:
die Positive-Elektrode-Aktivmaterialschicht ein Lithiumübergangsmetalloxid als eine Positive-Elektrode-Aktivmaterialschicht umfasst.

11. Positive Elektrode für eine Lithium-Sekundärbatterie nach Anspruch 10, wobei:
das Lithiumübergangsmetalloxid wenigstens ein Übergangsmetall umfasst, welches aus der Gruppe ausgewählt ist, welche aus Ni, Mn und Co besteht.

12. Lithium-Sekundärbatterie, umfassend die Positive Elektrode für eine Lithium-Sekundärbatterie nach einem der Ansprüche 1 bis **11**.

**Revendications**

1. Électrode positive pour une batterie secondaire au lithium, comprenant :

un collecteur de courant d'électrode positive,
une couche de revêtement d'apprêt formée sur le collecteur de courant d'électrode positive, et
une couche de matériau actif d'électrode positive formée sur la couche de revêtement d'apprêt,
dans laquelle la couche de revêtement d'apprêt comprend du phosphate de fer et de lithium, un liant, un matériau conducteur et un dispersant,
dans laquelle le phosphate de fer et de lithium est représenté par la formule chimique 1 suivante :

$$[\text{Formule chimique 1}] \qquad Li_{1+a}Fe_{1-s}M_s(PO_{4-b})X_b$$

dans laquelle,
M est au moins un élément sélectionné parmi Co, Ni, Al, Mg, Ti et V,
X est F, S ou N, et

$$0 \leq s \leq 0,5 \; ; \; -0,5 \leq a \leq +0,5 \; ; \; 0 \leq b \leq 0,1,$$

dans laquelle le dispersant est un caoutchouc nitrile butadiène hydrogéné (HNBR), et
dans laquelle le caoutchouc nitrile butadiène hydrogéné est contenu en quantité de 0,4 à 2,0 % en poids sur la base du poids du phosphate de fer et de lithium, et la double liaison résiduelle (RDB) présente dans le caoutchouc nitrile butadiène hydrogéné est contenue en une quantité de 30 % ou moins.

2. Électrode positive pour une batterie secondaire au lithium selon la revendication 1, dans laquelle :
le phosphate de fer et de lithium est composé de particules primaires, ou est un mélange des particules primaires et de particules secondaires dans un état où les particules primaires sont agrégées.

3. Électrode positive pour une batterie secondaire au lithium selon la revendication 2, dans laquelle :
les particules primaires du phosphate de fer et de lithium ont un diamètre moyen (D50) de 0,2 à 3,0 $\mu$m, et les particules secondaires ont un diamètre moyen (D50) de 7 à 25 $\mu$m.

4. Électrode positive pour une batterie secondaire au lithium selon la revendication 2, dans laquelle :
le phosphate de fer et de lithium est dans un état où les particules primaires et/ou les particules secondaires sont revêtues de carbone.

5. Électrode positive pour une batterie secondaire au lithium selon la revendication 1, dans laquelle :
la teneur en acrylonitrile (AN) du caoutchouc nitrile butadiène hydrogéné est de 20 à 50 % en poids, et la double liaison résiduelle (RDB) présente dans le caoutchouc nitrile butadiène hydrogéné est contenue en une quantité de 30 % ou moins.

6. Électrode positive pour une batterie secondaire au lithium selon la revendication 1, dans laquelle :
le caoutchouc nitrile butadiène hydrogéné présente un poids moléculaire moyen en poids (Mw) de 10 000 à 250 000.

7. Électrode positive pour une batterie secondaire au lithium selon la revendication 1, dans laquelle :
le liant inclus dans la couche de revêtement d'apprêt est du polyfluorure de vinylidène (PVdF) présentant un poids moléculaire moyen en poids (Mw) de 500 000 à 1 200 000.

8. Électrode positive pour une batterie secondaire au lithium selon la revendication 1, dans laquelle :
la couche de revêtement d'apprêt est formée à une épaisseur de 1 à 5 $\mu$m.

9. Électrode positive pour une batterie secondaire au lithium selon la revendication 1, dans laquelle :
la couche de matériau actif positif est formée à une épaisseur de 50 à 300 $\mu$m.

10. Électrode positive pour une batterie secondaire au lithium selon la revendication 1, dans laquelle :
la couche de matériau actif d'électrode positive comprend un oxyde de métal de transition lithié en tant que matériau actif d'électrode positive.

11. Électrode positive pour une batterie secondaire au lithium selon la revendication 10, dans laquelle :
l'oxyde de métal de transition lithié comprend au moins un métal de transition sélectionné dans le groupe constitué de Ni, Mn et Co.

12. Batterie secondaire au lithium comprenant l'électrode positive pour une batterie secondaire au lithium selon l'une quelconque des revendications 1 à 11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210023120
- US 2009301866 A1
- CN 110114914 A
- US 2019267612 A
- KR 1020180107759 A